# EUROPEAN PATENT SPECIFICATION

(11) **EP 4 505 160 B1**
(45) Date of publication and mention of the grant of the patent: **01.10.2025**
(21) Application number: 23709612.8
(22) Date of filing: 02.03.2023
(51) Int. Cl.: G01N 15/08, A61C 19/04

(54) **ORAL CARE MEASURING METHOD**
MUNDPFLEGEMESSVERFAHREN
PROCÉDÉ DE MESURE D'HYGI?NE BUCCALE

(30) Priority: 05.04.2022 EP 22166837
(43) Date of publication of application: 12.02.2025
(73) Proprietor: Unilever IP Holdings B.V., 6708 WH Wageningen (NL); Unilever Global IP Limited, Wirral, Merseyside CH62 4ZD (GB)
(72) Inventor: LIMER, Adam, John, 6708 WH Wageningen (NL); PHILPOTTS, Carole, Jane, 6708 WH Wageningen (NL)
(74) Representative: Tansley, Sally Elizabeth
(86) International application number: PCT/EP2023/055311
(87) International publication number: WO 2023/194002

(56) References cited:
- EP-A1- 3 540 419
- US-A1- 2009 186 090
- US-A1- 2010 047 742

## Description

### Field of the Invention

The invention relates to an apparatus and a method for measuring the tubule blocking ability of an oral care composition.

### Background of the Invention

Dental hypersensitivity is a painful condition affecting up to 20% of the adult population. There are categories of therapy for the treatment of tooth hypersensitivity based upon two modes of action. The first category, nerve-depolarising agents, are pharmaceutical agents such as potassium nitrate, which function by interfering with neural transduction of the pain stimulus.

The second category, known as occluding agents, function by physically blocking the exposed ends of the dentinal tubules, thereby reducing dentinal fluid movement and reducing the irritation associated with the shear stress described by the hydrodynamic theory.

The present invention is concerned with apparatus and method for measuring the effectiveness of an oral care composition that physically blocks the dentine tubules.

US 2009/186090 A1 and US 2010/047742 A1 show a system and a method for measuring blocking dentin tubules.

### Summary of the Invention

The present invention relates to a method for measuring the tubule blocking ability of an oral care composition comprising the following steps:
i) preparing a slurry of the composition;
ii) treating a porous material with the slurry;
iii) mounting the treated porous material above a liquid activated battery connected to a lighting system;
iv) applying a liquid onto the treated porous material; and
v) measuring the time for the lighting system to light.

### Detailed Description of the Invention

Except in the examples, or where otherwise explicitly indicated, all numbers in this description indicating amounts of material or conditions of reaction, physical properties of materials and/or use may optionally be understood as modified by the word "about".

All amounts are by weight of the composition, unless otherwise specified.

It should be noted that in specifying any ranges of values, any upper value can be associated with any particular lower value.

Where a feature is disclosed with respect to a particular aspect of the invention (for example a composition of the invention), such disclosure is also to be considered to apply to any other aspect of the invention (for example a method of the invention) *mutatis mutandis.*

Any ingredients mentioned in this application that are natural or naturally derived have been sourced from Europe.

Oral care composition are any treatments used to treat or enhance the oral cavity and teeth, preferably they are used to clean the surfaces of the oral cavity in particular the teeth.

Accordingly, preferred product forms for compositions for use by the invention are those which are suitable for brushing and/or rinsing the surfaces of the oral cavity.

Preferably the porous material mounted for use wit the invention is not flexible, more preferably it is hard. A preferred material is a hydroxyapatite, more preferably it is sintered glass, discs are particularly preferred.

Preferably the lighting system is a light-emitting diode (LED).

The porous material is mounted above the liquid activated battery in such a manner that liquid passing through it lands on the battery. Preferably the porous material is mounted vertically above the battery.

Preferably the liquid activated battery comprises a distance separated oxidizing electrode and a reducing electrode. Preferably the electrodes are arranged side by side or face to face.

According to the proposed device, the battery is activated upon the addition of the fluid therein and provides electrical energy while the fluid impregnates by capillarity the porous material.

The oxidizing electrode can be composed of any redox species, metal, alloy or polymer oxidizing material, for example of anthraquinone, viologen, TEMPO, calcium, iron, sodium, potassium, lithium, cadmium, copper, silver, magnesium, zinc, aluminum, among others.

The reducing electrode can be composed of any redox species, metal, alloy or polymer reducing material, for example of an airbreathing cathode, iron, cobalt, nickel, benzoquinone, TEMPO, silver, silver chloride, silver oxide, silver peroxide, copper, copper chloride, manganese, mercury, platinum, gold or carbon-based, including but not limited to electrodes based on activated carbon, graphene, carbon nanotubes, carbon paste, glassy carbon paste, and glassy carbon, among others.

The invention may have several batteries connected in series to increase an output voltage or in parallel to increase an output current.

The slurry is preferably water-based, preferably comprising at least 50 wt% of the total slurry of water, more preferably at least 75wt%.

Preferably the porous material is mounted above the lightening system in such a manner that liquid passing through it lands on the lightening system. Preferably the porous material is mounted vertically above the lightening system.

If measured the time period measured is the time from placement of the liquid on the porous material to the activation of the lightening system.

It should be noted that in some instanced if the oral care composition is a toothpaste a slurry should be prepared - in other instanced which are less preferred the composition may be in a format ready for direct application to the disc such as a mouthwash or other solution/dispersion.

The composition for use by the invention is most preferably in the form of a dentifrice. The term "dentifrice" denotes an oral composition which is used to clean the surfaces of the oral cavity. Such a composition is not intentionally swallowed for purposes of systemic administration of therapeutic agents, but is applied to the oral cavity, used to treat the oral cavity and then expectorated. Typically such a composition is used in conjunction with a cleaning implement such as a toothbrush, usually by applying it to the bristles of the toothbrush and then brushing the accessible surfaces of the oral cavity.

Preferably the dentifrice, in particular toothpaste is in the form of an extrudable semi-solid such as a cream, paste or gel (or mixture thereof).

In one embodiment a preferred class of oral care active for inclusion in the compositions for use in the invention includes agents for the remineralisation of teeth. The term "remineralisation" in the context of the present invention means the *in situ* generation of hydroxyapatite on teeth.

A specific example of a suitable agent for the remineralisation of teeth is a mixture of a calcium source and a phosphate source which, when delivered to the teeth results in the *in situ* generation of hydroxyapatite on teeth.

Illustrative examples of the types of calcium source that may be used in this context (hereinafter termed "remineralising calcium sources") include, for example, calcium phosphate, calcium gluconate, calcium oxide, calcium lactate, calcium glycerophosphate, calcium carbonate, calcium hydroxide, calcium sulphate, calcium carboxymethyl cellulose, calcium alginate, calcium salts of citric acid, calcium silicate and mixtures thereof. Preferably the remineralising calcium source is calcium silicate.

The amount of remineralising calcium source(s) (e.g. calcium silicate) in the composition of the invention typically ranges from 1 to 30%, preferably from 5 to 20% by total weight remineralising calcium source based on the total weight of the oral care composition.

Illustrative examples of the types of phosphate source that may be used in this context (hereinafter termed "remineralising phosphate sources") include, for example, monosodium dihydrogen phosphate, disodium hydrogen phosphate, sodium pyrophosphate, tetrasodium pyrophosphate, sodium tripolyphosphate, sodium hexametaphosphate, potassium dihydrogenphosphate, trisodium phosphate, tripotassium phosphate and mixtures thereof. Preferably the remineralising phosphate source is a mixture of trisodium phosphate and sodium dihydrogen phosphate.

The amount of remineralising phosphate source(s) (e.g. trisodium phosphate and sodium dihydrogen phosphate) in the composition of this invention typically ranges from 2 to 15%, preferably from 4 to 10% by total weight remineralising phosphate source based on the total weight of the oral care composition.

The invention will now be illustrated by the following non-limiting Examples.

### Examples

A 5% w/w solution of calcium chloride anhydrous (ex Sigma Aldrich, UK) in demineralised water was prepared. 30mm diameter, 3.5mm thick porosity 3 filter discs (ex Robo, VitroPOR) were treated with 3x 1.5ml applications of calcium chloride solution. The discs were allowed to air dry after each application.

Example 1: A toothpaste slurry was prepared by mixing 5g of Sensodyne Repair and Protect (Original Variant) with 10g water and mixing using a Fastprep mixer (ex MP Biomedicals, USA) at a speed of 5m/s for 20 seconds. The slurry was poured into a weighing boat and the glass disc soaked in the slurry for 10 seconds. The disc was removed, dabbed dry with a tissue, and allowed to air dry. The disc was mounted above a signaling device that flashes a light on exposure to water that has passed through the disc. Deionised water was added to the upper surface of the disc dropwise with a pipette. As water soaked into the disc more water was added. If drops collected on the surface before soaking into the disc, no further water was added, until the previous drops had absorbed.

Example 2: A toothpaste slurry was prepared by mixing 5g of Pepsodent Sensitive Mineral Active (Active Remin Daily Care variant) with 10g water and mixing using a Fastprep mixer (ex MP Biomedicals, USA) at a speed of 5m/s for 20 seconds. The slurry was poured into a weighing boat and the glass disc soaked in the slurry for 10 seconds. The disc was removed, dabbed dry with a tissue, and allowed to air dry. The disc was mounted above a signaling device comprising a battery that flashes a light on exposure to water that has passed through the disc. Deionised water was added to the upper surface of the disc dropwise with a pipette. As water soaked into the disc more water was added. If drops collected on the surface before soaking into the disc, no further water was added until the previous drops had absorbed.

| | **Time to illuminate light** |
|---|---|
| Example 1 | 45 seconds |
| Example 2 | N/A |

The Examples show that the method of the invention can be used to measure the tubule blocking capability of a toothpaste.

## Claims

1. A method for measuring the tubule blocking ability of an oral care composition comprising the following steps:
i) preparing a slurry of the composition;
ii) treating a porous material with the slurry;
iii) mounting the treated porous material above a liquid activated battery connected to a lighting system;
iv) applying a liquid onto the treated porous material; and
v) measuring the time for the lighting system to light.

2. A method according to claim 1 in which the liquid activated battery comprises a distance separated oxidizing electrode and a reducing electrode.

3. A method according to any preceding claim in which the electrodes are arranged side by side or face to face

4. A method according to any preceding claim in which the porous material is hard.

5. A method according to any previous claim in which the porous material is sintered glass, preferably a sintered glass disc.

6. A method according to any preceding claim in which the lighting system is a light-emitting diode (LED).

7. A method according to any preceding claim in which the lighting system is also placed beneath the porous material.

8. A method according to any preceding claim in which the oral care composition is a toothpaste.

9. A method according to any preceding claim in which the slurry comprises at least 50 wt% of the total slurry of water.

10. A method according to any preceding claim in which the porous material is pre-treated with calcium chloride prior to addition of the slurry i).

## Patentansprüche

1. Verfahren zur Messung der tubulären Blockierfähigkeit einer Mundpflegezusammensetzung, umfassend die folgenden Schritte:
i) Herstellung einer Aufschlämmung der Zusammensetzung;
ii) Behandlung eines porösen Materials mit der Aufschlämmung;
iii) Anbringen des behandelten porösen Materials über einer flüssigkeitsaktivierten Batterie, die an ein Beleuchtungssystem angeschlossen ist;
iv) Auftragen einer Flüssigkeit auf das behandelte poröse Material; und
v) Messung der Zeit, die das Beleuchtungssystem benötigt, um zu leuchten.

2. Verfahren nach Anspruch 1, bei dem die flüssigkeitsaktivierte Batterie eine beabstandete oxidierende Elektrode und eine reduzierende Elektrode umfasst.

3. Verfahren nach einem vorhergehenden Anspruch, bei dem die Elektroden nebeneinander oder gegenüberliegend angeordnet sind.

4. Verfahren nach einem vorhergehenden Anspruch, bei dem das poröse Material hart ist.

5. Verfahren nach einem vorhergehenden Anspruch, bei dem das poröse Material gesintertes Glas, vorzugsweise eine gesinterte Glasscheibe, ist.

6. Verfahren nach einem vorhergehenden Anspruch, bei dem das Beleuchtungssystem eine Leuchtdiode (LED) ist.

7. Verfahren nach einem vorhergehenden Anspruch, bei dem das Beleuchtungssystem ebenfalls unter dem porösen Material angeordnet ist.

8. Verfahren nach einem vorhergehenden Anspruch, bei dem die Mundpflegezusammensetzung eine Zahnpasta ist.

9. Verfahren nach einem vorhergehenden Anspruch, bei dem die Aufschlämmung mindestens 50 Gew.-% der gesamten Aufschlämmung an Wasser enthält.

10. Verfahren nach einem vorhergehenden Anspruch, bei dem das poröse Material vor der Zugabe der Aufschlämmung i) mit Calciumchlorid vorbehandelt wird.

## Revendications

1. Procédé pour mesurer l'aptitude au blocage des tubules d'une composition d'hygiène buccale, comprenant les étapes suivantes :
i) préparation d'une bouillie de la composition ;
ii) traitement d'un matériau poreux avec la bouillie ;
iii) montage du matériau poreux traité au-dessus d'une batterie activée par un liquide et connectée à un système d'éclairage ;
iv) application d'un liquide sur le matériau poreux traité ; et
v) mesure du temps pour que le système d'éclairage s'allume.

2. Procédé selon la revendication 1, dans lequel la batterie activée par un liquide comprend une électrode oxydante et une électrode réductrice séparées par une certaine distance.

3. Procédé selon l'une quelconque des revendications précédentes, dans lequel les électrodes sont disposées côte à côte ou face à face.

4. Procédé selon l'une quelconque des revendications précédentes, dans lequel le matériau poreux est dur.

5. Procédé selon l'une quelconque des revendications précédentes, dans lequel le matériau poreux est un verre fritté, de préférence un disque en verre fritté.

6. Procédé selon l'une quelconque des revendications précédentes, dans lequel le système d'éclairage est une diode électroluminescente (DEL).

7. Procédé selon l'une quelconque des revendications précédentes, dans lequel le système d'éclairage est aussi placé sous le matériau poreux.

8. Procédé selon l'une quelconque des revendications précédentes, dans lequel la composition d'hygiène buccale est une pâte dentifrice.

9. Procédé selon l'une quelconque des revendications précédentes, dans lequel la bouillie comprend au moins 50 %, en poids de la bouillie totale, d'eau.

10. Procédé selon l'une quelconque des revendications précédentes, dans lequel le matériau poreux est prétraité avec du chlorure de calcium avant l'addition de la bouillie i).
